# EUROPEAN PATENT SPECIFICATION

(11) **EP 3 808 480 B1**
(45) Date of publication and mention of the grant of the patent: **13.08.2025**
(21) Application number: 20201585.5
(22) Date of filing: 13.10.2020
(51) Int. Cl.: B23Q 9/00, B24B 5/28, B24B 9/00, B24B 21/00, B23Q 9/02

(54) **MACHINING ASSEMBLY**
BEARBEITUNGSANORDNUNG
ENSEMBLE D'USINAGE

(30) Priority: 14.10.2019 NL 2024014
(43) Date of publication of application: 21.04.2021
(73) Proprietor: VDL Groep B.V., 5652 AW Eindhoven (NL)
(72) Inventor: VAN LEEUWEN, Dorus Martinus Antonius, 5575 AE LUYKSGESTEL (NL)
(74) Representative: EP&C

(56) References cited:
- DE-A1- 4 013 470
- DE-U1- 202018 106 427
- US-A- 2 575 212
- US-A1- 2015 290 757
- US-A1- 2018 243 878

## Description

The present invention relates to a machining assembly for machining a circular workpiece surface, the machining assembly comprising:
- a positioning frame,
- a machining device connected to the positioning frame including a machining head movable along the circular surface to be machined, and adapted to engage and machine the surface to be machined.

Such a device is intended to machine large objects. For example it may be used to machine flanges of tubular elements for forming for example industrial vessels, pylons for wind turbines or power pylons. For example tubular elements for pylons comprise a rolled tube (shell), varying in diameter between approximately 1200 and approximately 3500 mm, and with a length between 2000 and 3000 mm. A flange of approximately 150 mm thickness is provided at the pipe end, which is connected to the shell by welding. The flange is used to interconnect the tubular element with another tubular element to form the pylon. This flange is machined before welding and meets the required tolerance. However, as a result of the welding of the flange against the tube, a material deformation occurs, with the result that the flatness of the ring-shaped flange often no longer satisfies the required tolerance. Due to the fact that the tube is rolled from raw material, the roundness of the tubular element is not sufficiently accurate to use it as a reference for a clamping process for machining the welded flange. Moreover it is complex to deal with a large, heavy product that is difficult to handle, which must be machined.

In WO 2012/155180 a machining assembly is disclosed which has a positioning frame, including a so called "spider", having a plurality of legs. The legs have a screw threaded locking bolt to engage with an internal surface of a pipe, so as to hold the positioning frame fixed inside the pipe. The locking bolts are adjustable to locate the spindle of the support frame at the centre of the pipe. A facing arm is fixed to the spindle. A cutting tool associated with the facing arm is brought in engagement with the surface to be machined. By virtue of the rotation of the spindle the surface is machined.

Such a machining assembly is currently used to machine flanges of relatively large tubular elements. However, it is a dangerous process for the operators, since these machines are not shielded. Furthermore these on-site machining assemblies are difficult to install, must be accurately set and aligned, which takes a lot of time and entails large costs. The result is not always optimal due to the vibration of the unstable cutting tool support. The costs of this machining method are very high.

US 2018/0243878 discloses an apparatus according to the preamble of claim 1 for surface finishing a flange surface of a pipe. The apparatus moves automatically circumferentially along the flange. It has flange surface rollers that engage the flange surface to be machined at the radially outer circumferential edge region of the flange. Furthermore it has a balance roller that engages the flange surface near a radially inner circumferential edge region of the flange. A power tool having a surface finishing attachment, such as an abrasive disc or brush is provided. The surface finishing attachment is located rearwadly or in front of the flange surface rollers and the balance roller, depending on the direction of movement of the device in the circumferential direction. Examples of surface finishing operations performed by the power tool may include stripping, cleaning, deburring, sanding, grinding, cutting, polishing and the like. This apparatus is not suitable for removing unevenness in the flange surface.

The invention has for an object to provide a simple machining assembly to remove unevenness of circular workpiece surfaces.

This object is achieved by a machining assembly according to claim 1.

The first subframe is used to roughly position the positioning frame against the surface to be machined. The position of the second subframe is adjustable with respect to first subframe. Seen in the direction of movement, the machining head is located between a pair of second support rollers. In an embodiment wherein the pair of rolls flanking the machining head is provided on the second subframe, this allows that the pair of support rollers can be placed and maintained in engagement with the surface to be machined, also when said surface contains unevenness. In another possible embodiment the pair of rollers flanking the machining head is provided on the first subframe. In such an embodiment the first subframe may have some flexibility to allow the support rollers to engage the surface to be machined, while the machining head can be brought in engagement with said surface via the adjustability of the second subframe and then the second subframe can be fixed with respect to the first subframe in that position. In any case, the pair of rollers and the machining head lie in a flat imaginary plane. If the surface to be treated is perfectly flat, the imaginary flat plane is parallel to the surface to be treated and no material will be cut or grinded away. However if the surface is uneven, which is initially the case in practise, the flat imaginary plane will change its inclination in the circular direction with respect to the surface because the pair of rollers follow the uneven surface. At some point the unevenness will end up between the pair of rollers whereby the machining head will engage and machine the uneven surface. At every pass of the entire circular surface by the machining assembly the unevenness will be reduced. After one or more passes by the machining head the surface will be sufficiently flat to satisfy the required tolerance.

In a possible embodiment the positioning frame comprises a console, wherein the console and the first subframe are connected by a first hinge having a first hinge axis. In a further embodiment the first subframe and the second subframe are interconnected by a second hinge having a second hinge axis. In an embodiment having said first hinge and said second hinge, the first hinge axis and second hinge axis are preferably perpendicular. In a possible embodiment the first hinge axis extends in vertical direction and the second hinge axis extends in horizontal direction.

The first hinge allows that the first support rollers can be placed against the circular surface, although this surface may be uneven and contain a waviness. Also, the machining assembly may initially not be exactly aligned with the surface to be machined but will engage initially with one of the first rollers on the surface to be machined, and then by the hinging action at the first hinge the support frame can tilt such that also the other one of the first rollers engages the surface.

A possible embodiment furthermore comprises a top support member from which the console is hingedly suspended by a third hinge, wherein the third hinge has a hinge axis parallel to the hinge axis of the second hinge.

With this top support member the machining assembly may be arranged to a vehicle or other movable support, whereby the assembly can be moved towards and from the workpiece to be machined. In a practical example the top beam may for example be arranged on the fork of a forklift truck and suspended in front of the workpiece. The forklift truck drives forward such that the first support rollers are brought near or against the circular surface to be machined.

In a possible embodiment a first actuator is arranged between the top beam and the console to move the positioning frame towards the workpiece surface and bring the first support rollers in engagement with the workpiece surface.

With the first actuator the machining assembly can be positioned roughly against the workpiece in a controlled manner.

In a possible embodiment a second actuator is arranged between the console and the second subframe to bring the second support rollers in engagement with the workpiece surface.

With the second actuator the second support rollers can be brought in engagement with the workpiece surface and possibly also the machining head.

In a practical embodiment the machining device may be a belt sander.

A belt sander is a relatively low cost device which allows a relatively easy machining of the surface to be machined. The direction of movement of the belt of the belt sander may be oblique with respect to the imaginary flat plane between the second rollers.

In a possible embodiment the position of the first support rollers is adjustable on the first subframe and the position of the second support rollers is adjustable on the first subframe or the second subframe. This enables the positioning frame to be adapted to different diameters of the workpiece surface.

In a possible embodiment the second support rollers are arranged on the first subframe, and a depth adjustment device is arranged between the first subframe and the second subframe to adjust the position of the machining device so as to bring the machining head in the imaginary flat plane defined by the pair of second support rollers.

In a possible embodiment a universal joint is attached to the first subframe. This allows to suspend the frame in a horizontal way above an upstanding tubular element, whereby by the universal or cardanic joint, the first and second support rollers can be brought in engagement with the surface to be machined. The universal joint can be coupled to a rotatable spindle, which can be driven to rotate the positioning frame. The workpiece is then maintained stationary and the machining assembly is rotated around the centre axis of the circular surface. By the universal or cardanic joint the first subframe can set and maintain itself in position with the support rollers against the surface to be machined.

The invention also relates to a method for machining a circular workpiece surface making use of a machining assembly as described in the above, wherein the machining assembly is maintained stationary and the workpiece is rotated around the centre axis of the circular surface.

In practise the tubular element may have a diameter between approximately 1200 and approximately 3500 mm, and with a length between 2000 and 3000 mm. These tubular elements are positioned in a lying fashion on a manipulator, which includes manipulator rollers which support the tubular element and are adapted to rotate the tubular element around its axis. The manipulator may be part of a carriage which can be used to transport the tubular element around the manufacturing site towards different processing units. The machining assembly can thus be positioned against the circular surface of the flange of the tubular element, as described in the above, and then the tubular element can be rotated by driving the manipulator rolls such that the circular surface to be machined passes the machining head. The circular surface may pass the machining head one or more times, during which unevenness or "waviness" is gradually removed by the machining head.

The invention also relates to a method for machining a circular workpiece surface making use of a machining assembly as described in the above, wherein the workpiece is maintained stationary and the machining assembly is moved around the centre axis of the circular surface.

The invention will be further explained in the following description with reference to the drawing, in which:
Fig. 1 shows a schematic side view of a machining assembly according to the invention arranged on a forklift truck and against a tubular element while machining a flange of the tubular element,
Fig. 2 shows schematically the assembly of Fig. 1 in a top view,
Fig. 3 shows schematically the assembly of Fig. 1 in a front view,
Figs. 4a to 4c illustrate schematically and in different orientations the arrangement of a flat plane in which the machining head and two associated support rollers of the machining assembly according to the invention lie,
Fig. 5 illustrates schematically the waviness of a circular surface to be machined,
Fig. 6 illustrates schematically the sanding of material from the wavy surface of Fig. 5 in a first pass,
Fig. 7 illustrates schematically the sanding of material from the wavy surface of Fig. 5 in a second pass,
Fig. 8 illustrates schematically the unevenness of the circular surface of Fig. 5 after a third pass,
Fig. 9 illustrates schematically the unevenness of the circular surface of Fig. 5 after still more passes, and
Fig. 10 shows in a view in perspective a machining assembly according to the invention arranged on an upstanding tubular element while machining a flange of the tubular element.

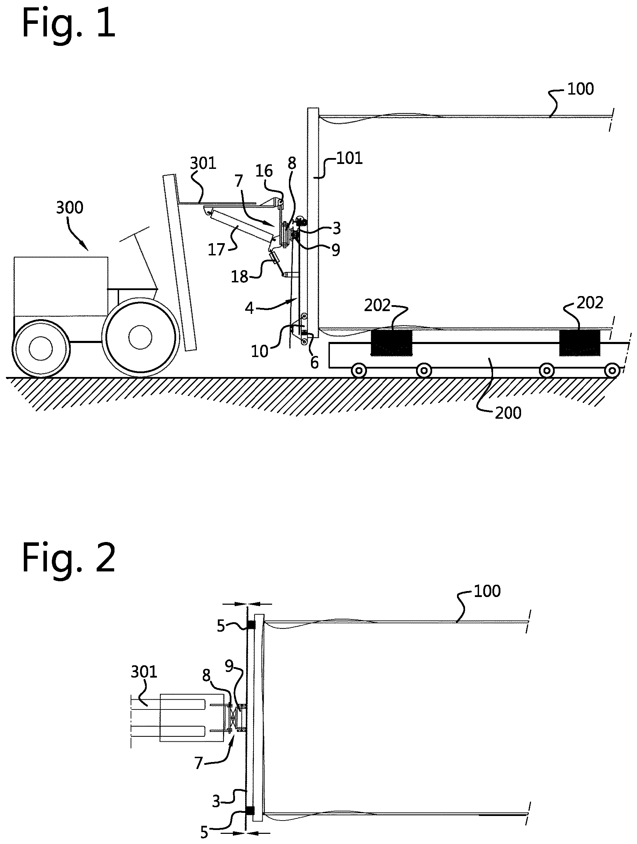

In Figs. 1-3 is shown schematically a tubular element 100. On an end of the tubular element 100 a flange 101 is welded. The tubular element 100 may be assembled with other similar tubular elements by means of the flanges which are bolted together. By interconnection two or more of the tubular elements 100 for example a pylon, such as a pylon for a wind turbine or a power pylon may be assembled. The tubular element 100 is made by rolling steel plates and may have in practise a diameter within a range of approximately 1200 mm and 3500 mm. The tubular element may in practise have a length between 2000 and 3000 mm. The flange 101 may have approximately a thickness of 150 mm. It is noted that the mentioned dimensions are merely intended to be indicative for the order of magnitude and should not be considered as limiting.

Such relatively large tubular elements 100 are moved around the manufacturing sites on a carriage 200 which is provided with rows 201 of manipulator rollers 202. The manipulator rollers 202 support the tubular element 100. The manipulator rollers 202 are rotatable around their central axis and are driven by suitable drive means. By rotating the manipulator rollers 202 the tubular element 100 can be rotated around its central axis and manipulated such that it can be machined or worked on otherwise.

The tubular elements 100 are made by rolling and welding and are not perfectly round. In the circumference a certain waviness may occur which is indicated schematically at 102. Therefore the tubular wall of the tubular element 100 cannot be used as a reference for further machining.

The flange 101 is basically a steel ring which is machined to flatten it to satisfy a certain tolerance range. However, the flange 101 is welded afterwards to the end of the tubular element 100. Due to the welding operation the flange 101 will be deformed and will show a certain waviness or unevenness in the abutment surface 102 with which it abuts an opposing flange 101 when assembled to form for example a pylon. The flatness or evenness of the abutment surface 102 of the flange 101 must satisfy a certain tolerance range, because otherwise the abutment surfaces 102 of the flanges 101 do not form a tight seal in the assembled state whereby water may reach the bolts with which the flanges 101 are tightened together and corrosion issues will arise in the flange structure. Furthermore, when the flanges do not form a tight seal during the installation of the bolts, unwanted forces will rise in the flange connection during this process. These forces can result in unacceptable peak forces in the material, and possible lifetime reduction in the flange connection. Moreover, too much bolt-load will be lost in closing the gap due to a non-tight sealing of the flanges, instead of creating a pretension in the flange connection.

In Fig. 1 is shown that a forklift truck 300 is positioned in front of the end of the tubular element 100. The forklift truck 300 has a fork 301 which carries a machining assembly 1 according to the invention. The machining assembly 1 is used to machine the abutment surface 102 of the flange 101 to remove the unevenness.

The machining assembly 1 in this example comprises a positioning frame 2. The positioning frame comprises a first subframe 3 and a second subframe 4. The first subframe 3 comprises arms 31 which are provided with first support rollers 5 adapted to roll over the circular abutment surface 102 to be machined in a circular direction. Furthermore the first subframe comprises legs 32 which are provided with second support rollers 6 to roll over the circular surface 102 to be machined.

The position of the first and second support rollers 5 and 6 is preferably adjustable on the arms 31 and legs 32 of the first subframe 3 so as to be able to adapt the positioning frame 2 to different flange diameters.

The positioning frame 2 furthermore comprises a console 7. The console 7 and the first subframe 3 are connected by a first hinge 8 having a vertical hinge axis. The first subframe 3 and the second subframe 4 are interconnected by a second hinge 9 having a horizontal hinge axis. The position of the second subframe 4 with respect to the first subframe 3 is adjustable by rotating the second subframe 4 with respect to the first subframe 3 around the second hinge 9.

The legs 32 of the first subframe are interconnected by a bridge part 33. The bridge part 33 and the second subframe are interconnected by an adjustment member 34, which may be embodied as a threaded spindle by which the depth position of a machining device 10, which is arranged on the second subframe 4, as will be described below, may be adjusted..

The machining assembly comprises a top support member 15, which in the embodiment shown in the figures is embodies as a plate. The console 7 is hingedly connected to the top support member 15 by a third hinge 16. The third hinge 16 has a hinge axis parallel to the hinge axis of the second hinge. When the top support member is 15 attached to the fork of the forklift and lifted, the positioning frame 2 is suspended from the third hinge 16 which extends approximately in the horizontal direction.

A first actuator 17 is arranged between the top support member 15 and the console 7 to move the positioning frame towards the workpiece surface 102 and bring the first support rollers 5 in engagement with the workpiece surface 102.

A second actuator 18 is arranged between the console 7 and the second subframe 4 to move the second subframe forward. Via the bridge part 33 and the spindle 34 the legs 32 of the first subframe 3 are moved together with the second subframe 4, such that the second support rollers 6 are brought in engagement with the workpiece surface 102.

The first actuator 17 and second actuator 18 may in a practice be embodied as hydraulically or pneumatically operated cylinders.

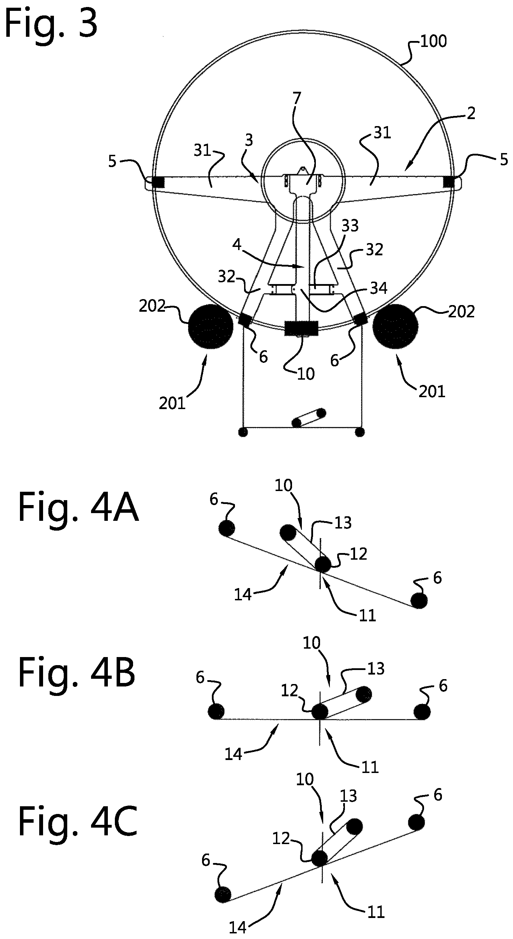

A machining device 10 having a machining head 11 is arranged on the second subframe 4 such that the machining head 11 is located between the second support rollers 6 and such that the machining head 11 and the engagement surface of the second support rollers 6 lie in one flat imaginary plane, which imaginary plane is indicated in Fig. 4a - 4c with reference numeral 14. In the embodiment shown in the figures the machining device 10 is a belt sander. One of the rollers 12 of the belt sander with the belt 13 running over it forms the machine head 11 in this embodiment. The machine head 11 can be brought in the flat imaginary plane defined by the pair of second rollers 6 by means of the adjustment spindle 34.

The machining assembly can be positioned against the circular surface 102 of the flange 101 of the tubular element 100, by initially approaching the flange with the forklift truck and suspending the positioning frame in front of the flange 101. Next, the first subframe 3 is moved forward towards the flange surface 102 by means of the first actuator 17 until the first support 5 rollers are positioned against said surface 102. The positioning frame is now roughly positioned against the flange 101 and is supported by the flange 101. The vertical hinge 8 facilitates that the first support rollers 5 automatically find the engagement with the surface 102. In a following stage the second subframe 4 is advanced towards the surface 102 by means of the second actuator 18, whereby the lower end of the second subframe 4 tilts forward with respect to the first subframe 3. Thereby the second support rollers 6, which are located on the legs 32 of the first subframe 3, and the machining head 11, which is located at the lower end of the second subfame 4, are brought in engagement with the surface 102 to be machined. This structure ensures that the second support rollers 6 are maintained in contact with the surface 102.

In a next stage the tubular element 100 can be rotated by driving the manipulator rolls 202 such that the circular surface 102 to be machined passes the machining head 11. The circular surface 102 may pass the machining head one or more times, during which unevenness or "waviness" is gradually removed by the machining head. This will be explained with reference to Figs. 4-9.

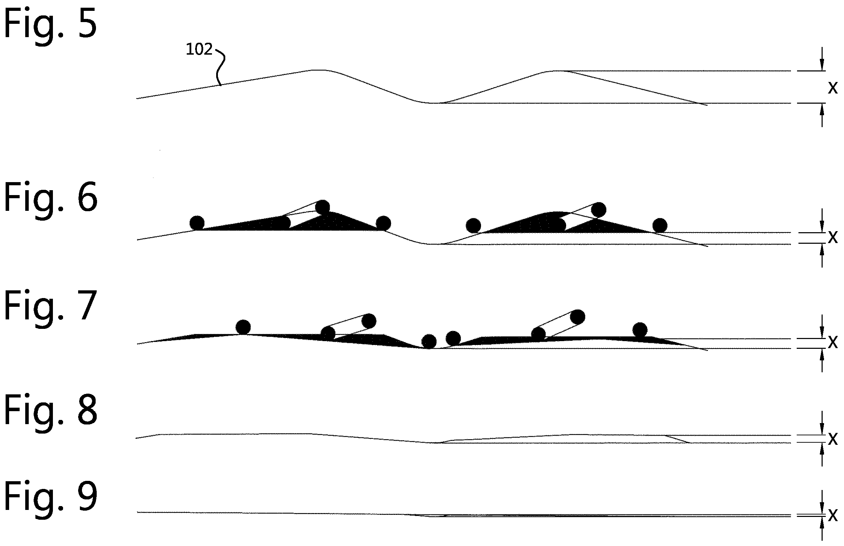

In Fig. 5 the height profile of the surface 102 to be machined is shown vs. the position on the circumference of the surface. What is shown is that the surface 102 has a certain waviness with a maximum height X between the lowest and highest point. The lowest point is taken as a reference point.

The machining head 11 and the second support rollers 6 define a flat plane 14 as is visible in Fig 4b. This flat plane 14 can be positioned against the surface 102 to be machined. If the surface 102 would be perfectly flat the flat plane 14 would have the orientation as is illustrated in Fig. 4b which is parallel to the flat surface 102. However, as mentioned, the surface 102 is in practice not flat initially. When the surface 102 moves along the machining device 10, the second support rollers 6, which are located in front and behind the machining head in the direction of movement, will follow the height profile of the surface 102. Thereby the orientation of the flat plane 14 changes and has a tilted orientation as is shown in Fig. 4a and Fig. 4b.

The effect of the changing orientation of the plane 14 is illustrated in Fig. 6. On the wave profile of the surface 102 of Fig. 5 the flat plane 14 will at some points intersect with the wave profile of the surface 102 while the surface 102 passes the machining head 11, and the machining head 11 will come in contact with the surface 102 and sand off some material of the surface 102. Thereby the maximum height X of the profile relative to the lowest point will become smaller as is indicated in Fig. 6. In the next revolution of the surface 102 the same effect takes place and the wave profile of the surface becomes smaller and smaller every rotation, which is illustrated in Figs. 7-9. At some point the maximum height X of the surface profile of surface 102 is within the tolerance limits (e.g. Fig. 9) and the machining process can be stopped.

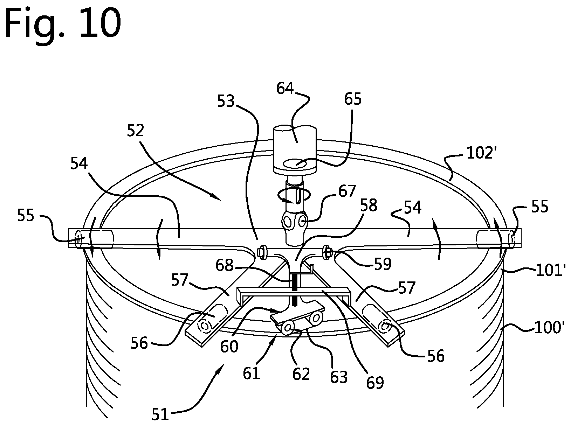

In the figures 1-3 a vertical orientation of the framework is shown which is arranged to machine the flange of a lying tubular element. However, it is also possible to machine the flange of an upstanding tubular element 100' which is shown in Fig. 10. The tubular element 100' has a flange 101' which has an abutment surface 102' which has to be machined to flatten it.

The machining assembly 51 in this example comprises a positioning frame 52. The positioning frame 52 comprises a first subframe 53. The first subframe 53 comprises two arms 54 provided with first support rollers 55 adapted to roll over the circular abutment surface 102' to be machined in a circular direction. The first subframe 53 furthermore comprises legs 57 provided with second support rollers 56 to roll over the circular surface 102' to be machined to move with the first subframe 53 in the circular direction. The arms 54 and legs 57 are connected and form an integral unit, i.e. the first subframe 53.

The position of the first and second support rollers 55 and 56 is preferably adjustable on the arms 54 and legs 57 of the first subframe 53 so as to be able to adapt the positioning frame 52 to different flange diameters.

The positioning frame 52 furthermore comprises a second subframe 58. The first subframe 53 and the second subframe 58 are interconnected by a hinge 59 having a horizontal hinge axis. The position of the second subframe 58 with respect to the first subframe 53 is adjustable by rotating the second subframe 58 with respect to the first subframe 53 around the hinge 59.

A machining device 60 having a machining head 61 is arranged on the second subframe 58 such that the machining head 61 is located between the second support rollers 56 and such that the machining head 61 and the engagement surface of the second support rollers 56 lie in one flat imaginary plane, which imaginary plane is indicated in Fig. 4a - 4c with reference numeral 14. Thereto there is a depth adjustment device arranged, comparable to the depth adjustment device illustrated in the previous embodiment of Figs. 1-3. In the embodiment shown in Fig. 10 the depth adjustment device comprises a bridge part 69 which interconnects the legs 57 and a threaded spindle 68 which extends through a threaded bore in the bridge part 69.

In the embodiment shown in Fig. 10 the machining device 60 is a belt sander. One of the rollers 62 of the belt sander with the belt 63 running over it forms the machine head 61 in this embodiment.

The machining assembly 51 is suspended from a fixed suspension point 64 which has to be located above the centre of the circle defined by the circular flange 101'. The connection between the positioning frame 52 and the fixed suspension point is formed by a rotational joint 65 and a universal joint 67 (cardan joint). In use the positioning frame 52 is rotated and the tubular element 100' remains stationary. In the fixed suspension point a drive means such as an electrical motor can be incorporated to drive the rotational movement of the positioning frame 52. Another option is to drive the rollers 55 electrically, pneumatically or hydraulically, in which case the rotational joint is only a suspension and rotation point.

The use of the machining assembly 1, 51 according to the invention is in particular envisaged in methods of manufacturing pylons, such as a wind turbine pylon or a power pylon, industrial vessels, large diameter piping. With the machining assembly of the present invention no difficult mounting of the frame against a reference surface, or difficult alignment of frame and machining tools has to be performed. The machining assembly 1, 51 allows a simple and quick positioning against the surface 102 to be machined and the positioning will set itself.

## Claims

1. Machining assembly (1; 51) for machining a circular workpiece surface, the machining assembly comprising:
- a positioning frame (2; 52); and
- a machining device (10; 60) connected to the positioning frame (2; 52) including a machining head (11; 61) movable along the circular surface to be machined, and adapted to engage and machine the surface to be machined,
wherein:
the positioning frame (2; 52) comprises a first subframe (3; 53) and a second subframe (4; 58),
the first subframe (3; 53) is provided with first support rollers (5; 55) adapted to roll over the circular surface to be machined in a circular direction,
the second subframe (4; 58) is coupled to the first subframe (3; 53) such that the position of the second subframe (4; 58) with respect to the first subframe (3; 53) is adjustable, and
**characterized in that** the machining device (10; 60) is arranged on the second subframe (4; 58) such that the machining head (11; 61) is located between a pair of second support rollers (6; 56) in the direction of movement, said pair of second support rollers (6; 56) being provided on the first subframe (3; 53) or the second subframe (4; 58), and such that the machining head (11; 61) and the engagement surface of said pair of second support rollers (6; 56) lie in one flat imaginary plane.

2. Machining assembly according to claim 1, wherein the positioning frame comprises a console (7), wherein the console (7) and the first subframe (3) are connected by a first hinge (8) having a first hinge axis.

3. Machining assembly according to claim 1 or 2, wherein the first subframe (3) and the second subframe (4) are interconnected by a second hinge (9) having a second hinge axis.

4. Machining assembly according to claim 2 and 3, wherein the first hinge axis and second hinge axis are perpendicular.

5. Machining assembly according to claim 4, wherein the first hinge axis extends substantially in vertical direction and the second hinge axis extends substantially in horizontal direction.

6. Machining assembly according to any of the claims 2-5, furthermore comprising a top support member (15) from which the console (7) is hingedly suspended by a third hinge (16), wherein the third hinge (16) has a hinge axis parallel to the hinge axis of the second hinge (9).

7. Machining assembly according to claim 6, wherein a first actuator (17) is arranged between the top support member (15) and the console (7) to move the positioning frame (2) towards the workpiece surface and bring the first support rollers (5) in engagement with the workpiece surface.

8. Machining assembly according to claim 7, wherein a second actuator (18) is arranged between the console (7) and the second subframe (4) to bring the second support rollers (6) in engagement with the workpiece surface.

9. Machining assembly according to any of the preceding claims, wherein the machining device (10; 60) is a belt sander.

10. Machining assembly according to any of the preceding claims, wherein the position of the first support rollers (5; 55) is adjustable on the first subframe (3; 53) and the position of the second support rollers (6; 56) is adjustable on the first subframe (53) or the second subframe (4).

11. Machining assembly according to any of the preceding claims, wherein the second support rollers (6; 56) are arranged on the first subframe (3; 53), and wherein a depth adjustment device is arranged between the first subframe (3; 53) and the second subframe (4; 58) to adjust the position of the machining device (10; 60) so as to bring the machining head (11; 61) in the imaginary flat plane defined by the pair of second support rollers (6; 56).

12. Machining assembly according to any of the claims 1, 3, 9-11, wherein a universal joint (67) is attached to the first subframe (53).

13. Method for machining a circular workpiece surface making use of a machining assembly (1) according to any of the preceding claims, wherein the machining assembly (1) is maintained stationary and the workpiece is rotated around the centre axis of the circular surface.

14. Method for machining a circular workpiece surface making use of a machining assembly (51) according to any of the preceding claims, wherein the workpiece is maintained stationary and the machining assembly (51) is moved around the centre axis of the circular surface.

## Patentansprüche

1. Bearbeitungsanordnung (1; 51) zum Bearbeiten einer kreisförmigen Werkstückfläche, wobei die Bearbeitungsanordnung Folgendes umfasst:
- einen Positionierungsrahmen (2; 52); und
- eine Bearbeitungsvorrichtung (10; 60), die mit dem Positionierungsrahmen (2; 52) verbunden ist und einen Bearbeitungskopf (11; 61) aufweist, der entlang der zu bearbeitenden kreisförmigen Fläche beweglich und dazu eingerichtet ist, in die zu bearbeitende Fläche einzugreifen und diese zu bearbeiten,
wobei:
der Positionierungsrahmen (2; 52) einen ersten Teilrahmen (3; 53) und einen zweiten Teilrahmen (4; 58) umfasst,
der erste Teilrahmen (3; 53) mit ersten Laufrollen (5; 55) versehen ist, die dazu eingerichtet sind, über die zu bearbeitende kreisförmige Fläche in eine kreisförmige Richtung zu rollen,
der zweite Teilrahmen (4; 58) mit dem ersten Teilrahmen (3; 53) gekoppelt ist, sodass die Position des zweiten Teilrahmens (4; 58) in Bezug zum ersten Teilrahmen (3; 53) einstellbar ist, und
**dadurch gekennzeichnet, dass** die Bearbeitungsvorrichtung (10; 60) am zweiten Teilrahmen (4; 58) angeordnet ist, sodass der Bearbeitungskopf (11; 61) zwischen einem Paar zweite Laufrollen (6; 56) in die Bewegungsrichtung angeordnet ist, wobei das Paar zweite Laufrollen (6; 56) am ersten Teilrahmen (3; 53) oder zweiten Teilrahmen (4; 58) vorgesehen ist, und sodass der Bearbeitungskopf (11; 61) und die Eingriffsfläche des Paars zweite Laufrollen (6; 56) in einer planen, gedachten Ebene liegen.

2. Bearbeitungsanordnung nach Anspruch 1, wobei der Positionierungsrahmen eine Konsole (7) umfasst, wobei die Konsole (7) und der erste Teilrahmen (3) verbunden sind durch ein erstes Scharnier (8) mit einer ersten Scharnierachse.

3. Bearbeitungsanordnung nach Anspruch 1 oder 2, wobei der erste Teilrahmen (3) und der zweite Teilrahmen (4) über ein zweites Scharnier (9) mit einer zweiten Scharnierachse miteinander verbunden sind.

4. Bearbeitungsanordnung nach Anspruch 2 oder 3, wobei die erste Scharnierachse und die zweite Scharnierachse senkrecht sind.

5. Bearbeitungsanordnung nach Anspruch 4, wobei sich die erste Scharnierachse im Wesentlichen in vertikale Richtung erstreckt und sich die zweite Scharnierachse im Wesentlichen in horizontale Richtung erstreckt.

6. Bearbeitungsanordnung nach einem der Ansprüche 2-5, ferner umfassend ein oberes Stützelement (15), von dem die Konsole (7) durch ein drittes Scharnier (16) gelenkig aufgehängt ist, wobei das dritte Scharnier (16) eine Scharnierachse parallel zur Scharnierachse des zweiten Scharniers (9) aufweist.

7. Bearbeitungsanordnung nach Anspruch 6, wobei ein erstes Stellglied (17) zwischen dem oberen Stützelement (15) und der Konsole (7) angeordnet ist, um den Positionierungsrahmen (2) zur Werkstückfläche zu bewegen und die ersten Laufrollen (5) mit der Werkstückfläche in Eingriff zu bringen.

8. Bearbeitungsanordnung nach Anspruch 7, wobei ein zweites Stellglied (18) zwischen der Konsole (7) und dem zweiten Teilrahmen (4) angeordnet ist, um die zweiten Laufrollen (6) mit der Werkstückfläche in Eingriff zu bringen.

9. Bearbeitungsanordnung nach einem der vorstehenden Ansprüche, wobei die Bearbeitungsvorrichtung (10; 60) ein Bandschleifer ist.

10. Bearbeitungsanordnung nach einem der vorstehenden Ansprüche, wobei die Position der ersten Laufrollen (5; 55) auf dem ersten Teilrahmen (3; 53) einstellbar ist und die Position der zweiten Laufrollen (6; 56) auf dem ersten Teilrahmen (53) oder dem zweiten Teilrahmen (4) einstellbar ist.

11. Bearbeitungsanordnung nach einem der vorstehenden Ansprüche, wobei die zweiten Laufrollen (6; 56) auf dem ersten Teilrahmen (3; 53) angeordnet sind und wobei eine Tiefeneinstellungsvorrichtung zwischen dem ersten Teilrahmen (3; 53) und dem zweiten Teilrahmen (4; 58) angeordnet ist, um die Position der Bearbeitungsvorrichtung (10; 60) einzustellen, um den Bearbeitungskopf (11; 61) in die durch das Paar zweite Laufrollen (6; 56) definierte gedachte, plane Ebene zu bringen.

12. Bearbeitungsanordnung nach einem der Ansprüche 1, 3, 9-11, wobei ein Kardangelenk (67) an dem ersten Teilrahmen (53) befestigt ist.

13. Verfahren zum Bearbeiten einer kreisförmigen Werkstückfläche unter Verwendung einer Bearbeitungsanordnung (1) nach einem der vorstehenden Ansprüche, wobei die Bearbeitungsanordnung (1) stationär gehalten wird und das Werkstück um die Mittelachse der Kreisfläche gedreht wird.

14. Verfahren zum Bearbeiten einer kreisförmigen Werkstückfläche unter Verwendung einer Bearbeitungsanordnung (51) nach einem der vorstehenden Ansprüche, wobei das Werkstück stationär gehalten wird und die Bearbeitungsanordnung (51) um die Mittelachse der Kreisfläche bewegt wird.

## Revendications

1. Ensemble d'usinage (1 ; 51) destiné à usiner une surface de pièce à usiner circulaire, l'ensemble d'usinage comprenant :
- un cadre de positionnement (2 ; 52) ; et
- un dispositif d'usinage (10 ; 60) relié au cadre de positionnement (2 ; 52) comprenant une tête d'usinage (11 ; 61) mobile le long de la surface circulaire à usiner et conçue pour venir en prise la surface à usiner et l'usiner,
le cadre de positionnement (2 ; 52) comprenant un premier sous-cadre (3 ; 53) et un second sous-cadre (4 ; 58),
le premier sous-cadre (3 ; 53) étant pourvu de premiers galets de soutien (5 ; 55) conçus pour rouler sur la surface circulaire à usiner dans une direction circulaire,
le second sous-cadre (4 ; 58) étant accouplé au premier sous-cadre (3 ; 53) de sorte que la position du second sous-cadre (4 ; 58) par rapport au premier sous-cadre (3 ; 53) soit réglable, et
**caractérisé en ce que** le dispositif d'usinage (10 ; 60) est disposé sur le second sous-cadre (4 ; 58) de sorte que la tête d'usinage (11 ; 61) soit située entre une paire de seconds galets de soutien (6 ; 56) dans la direction de déplacement, ladite paire de seconds galets de soutien (6 ; 56) étant située sur le premier sous-cadre (3 ; 53) ou le second sous-cadre (4 ; 58), et de sorte que la tête d'usinage (11 ; 61) et la surface de mise en prise de ladite paire de seconds galets de soutien (6 ; 56) se trouvent dans un plan imaginaire plat.

2. Ensemble d'usinage selon la revendication 1, le cadre de positionnement comprenant une console (7), la console (7) et le premier sous-cadre (3) étant reliés par une première charnière (8) ayant un premier axe d'articulation.

3. Ensemble d'usinage selon la revendication 1 ou 2, le premier sous-cadre (3) et le second sous-cadre (4) étant reliés entre eux par une deuxième charnière (9) ayant un second axe d'articulation.

4. Ensemble d'usinage selon les revendications 2 et 3, le premier axe d'articulation et le second axe d'articulation étant perpendiculaires.

5. Ensemble d'usinage selon la revendication 4, le premier axe d'articulation s'étendant sensiblement dans la direction verticale et le second axe d'articulation s'étendant sensiblement dans la direction horizontale.

6. Ensemble d'usinage selon l'une quelconque des revendications 2 à 5, comprenant en outre un élément de support supérieur (15) à partir duquel la console (7) est suspendue de manière articulée par une troisième charnière (16), la troisième charnière (16) ayant un axe d'articulation parallèle à l'axe d'articulation de la deuxième charnière (9).

7. Ensemble d'usinage selon la revendication 6, un premier actionneur (17) étant disposé entre l'élément de support supérieur (15) et la console (7) pour déplacer le cadre de positionnement (2) vers la surface de pièce à usiner et amener les premiers galets de soutien (5) en prise avec la surface de pièce à usiner.

8. Ensemble d'usinage selon la revendication 7, un second actionneur (18) étant disposé entre la console (7) et le second sous-cadre (4) pour amener les seconds galets de soutien (6) en prise avec la surface de pièce à usiner.

9. Ensemble d'usinage selon l'une quelconque des revendications précédentes, le dispositif d'usinage (10 ; 60) étant une ponceuse à bande.

10. Ensemble d'usinage selon l'une quelconque des revendications précédentes, la position des premiers galets de soutien (5 ; 55) étant réglable sur le premier sous-cadre (3 ; 53) et la position des seconds galets de soutien (6 ; 56) étant réglable sur le premier sous-cadre (53) ou le second sous-cadre (4).

11. Ensemble d'usinage selon l'une quelconque des revendications précédentes, les seconds galets de soutien (6 ; 56) étant disposés sur le premier sous-cadre (3 ; 53), et un dispositif de réglage de profondeur étant disposé entre le premier sous-cadre (3 ; 53) et le second sous-cadre (4 ; 58) pour régler la position du dispositif d'usinage (10 ; 60) de sorte à amener la tête d'usinage (11 ; 61) dans le plan plat imaginaire défini par la paire de seconds galets de soutien (6 ; 56).

12. Ensemble d'usinage selon l'une quelconque des revendications 1, 3, 9 à 11, un joint universel (67) étant fixé au premier sous-cadre (53).

13. Procédé d'usinage d'une surface de pièce à usiner circulaire utilisant un ensemble d'usinage (1) selon l'une quelconque des revendications précédentes, l'ensemble d'usinage (1) étant maintenu fixe et la pièce à usiner étant tournée autour de l'axe central de la surface circulaire.

14. Procédé d'usinage d'une surface de pièce à usiner circulaire utilisant un ensemble d'usinage (51) selon l'une quelconque des revendications précédentes, la pièce à usiner étant maintenue fixe et l'ensemble d'usinage (51) étant déplacé autour de l'axe central de la surface circulaire.
